# NEUE EUROPÄISCHE PATENTSCHRIFT

(11) **EP 3 656 530 B2**
(45) Veröffentlichungstag und Bekanntmachung des Hinweises auf die Entscheidung über den Einspruch: **01.04.2026**
(45) Hinweis auf die Patenterteilung: 03.08.2022
(21) Anmeldenummer: 18207607.5
(22) Anmeldetag: 21.11.2018
(51) Int. Cl.: B29C 48/25, B29C 48/27, B29C 45/17, B29B 7/48, B29B 7/80, B29B 7/84, B29C 48/92

(54) **VERBINDUNGSVORRICHTUNG ZUM VERBINDEN EINER SCHNECKENMASCHINE MIT EINEM GETRIEBE UND VERFAHREN ZUR REINIGUNG EINER DERARTIGEN VERBINDUNGSVORRICHTUNG**
CONNECTING DEVICE FOR CONNECTING A SCREW-TYPE MACHINE WITH A GEAR BOX AND A METHOD FOR CLEANING SUCH A CONNECTING DEVICE
DISPOSITIF DE RACCORDEMENT DESTINÉ À RACCORDER UNE MACHINE À VIS SANS FIN À UN ENGRENAGE ET PROCÉDÉ DE NETTOYAGE D'UN TEL DISPOSITIF DE RACCORDEMENT

(43) Veröffentlichungstag der Anmeldung: 27.05.2020
(73) Patentinhaber: Coperion GmbH, 70469 Stuttgart (DE)
(72) Erfinder: Sommer, Daniel, 70192 Stuttgart (DE)
(74) Vertreter: Rau, Schneck & Hübner Patentanwälte Rechtsanwälte PartGmbB

(56) Entgegenhaltungen:
- EP-A1- 2 946 904
- DE-A1- 102017 123 940
- US-A- 3 278 986
- US-A- 3 811 658
- US-A- 5 120 206

## Beschreibung

Die Erfindung betrifft eine Verbindungsvorrichtung zum Verbinden einer Schneckenmaschine mit einem Getriebe und ein Verfahren zur Reinigung einer derartigen Verbindungsvorrichtung.

Aus der DE 10 2006 022 646 A1 ist eine Anlage zur Aufbereitung von Schüttgut bekannt, die im Pharmabereich zum Einsatz kommt. Die Anlage umfasst eine Schneckenmaschine, die von einem elektrischen Antriebsmotor über ein Getriebe angetrieben wird. Die Schneckenmaschine ist mit dem Getriebe über eine Verbindungsvorrichtung verbunden, die als Getriebelaterne bezeichnet wird.

Aus der EP 2 946 904 A1 ist eine Vorrichtung zur Aufbereitung und Entgasung von aufzubereitendem Material bekannt. Die Vorrichtung umfasst eine Schneckenmaschine, die über eine Getriebelaterne mit einem Getriebe verbunden ist. Die Getriebelaterne umfasst eine Entgasungsöffnung, die über eine Saugleitung mit einer Saugeinrichtung verbunden ist. Flüchtige Bestandteile werden mittels der Saugeinrichtung aus den Gehäusebohrungen der Schneckenmaschine über den Innenraum der Getriebelaterne und die Entgasungsöffnung abgesaugt.

Die US 3,811,658 A offenbart einen Extruder, der mit einem Getriebe verbunden ist. Zwischen dem Extruder und dem Getriebe ist eine Kammer ausgebildet, die über einen Ringspalt mit der Gehäusebohrung des Extruders in Verbindung steht. Über den Ringspalt können Additive in die Gehäusebohrung zugeführt oder die Gehäusebohrung entgast werden.

Aus der US 3,278,986 A ist eine Compoundiervorrichtung mit einer Schneckenwelle bekannt, die mittels eines Getriebes angetrieben wird. Zum Kühlen eines Wellenabschnitts der Schneckenwelle weist die Compoundiervorrichtung ein Gebläse auf.

Aus der DE 10 2017 123 940 A1 ist ein Seitenextruder bekannt, der über eine Getriebelaterne mit einem Getriebe und einem Antriebsmotor verbunden ist. Die Getriebelaterne ist offen ausgebildet und weist Kühlwasseranschlüsse auf.

Aus der US 5,120,206 A ist eine Zahnradpumpe bekannt.

Eine derartige Getriebelaterne umfasst üblicherweise ein Gehäuse, in dem die Wellenverbindungen zwischen den Schneckenwellen der Schneckenmaschine und den Getriebewellen des Getriebes angeordnet sind. Da im Pharmabereich als Schüttgut sehr feine Pulver aufbereitet werden, kommt es zu unerwünschten Verschmutzungen der Schneckenmaschine sowie der Getriebelaterne.

Der Erfindung liegt die Aufgabe zugrunde, eine Verbindungsvorrichtung zum Verbinden einer Schneckenmaschine mit einem Getriebe zu schaffen, die einfach, effizient und zuverlässig zu reinigen ist.

Diese Aufgabe wird durch eine Verbindungsvorrichtung mit den Merkmalen des Anspruchs 1 gelöst. Erfindungsgemäß weist die Verbindungsvorrichtung mindestens ein Reinigungselement zum Reinigen des Innenraums und einer den Innenraum begrenzenden Innenwand auf. Das mindestens eine Reinigungselement ist in die Verbindungsvorrichtung integriert, so dass Verschmutzungen, die im Betrieb von der Schneckenmaschine in den Innenraum gelangen, in einfacher, effizienter und zuverlässiger Weise mittels des mindestens einen Reinigungselements entfernt werden können.

Die Verbindungsvorrichtung umfasst insbesondere eine Versorgungseinrichtung, die zur Versorgung mit einem Reinigungsfluid, beispielsweise mit einer Reinigungsflüssigkeit, mit dem mindestens einen Reinigungselement verbunden ist. Die Versorgungseinrichtung ermöglicht eine Zufuhr des Reinigungsfluids zu dem mindestens einen Reinigungselement.

Der Innenraum wird durch die Innenwand begrenzt, die durch das Gehäuse und durch in dem Gehäuse angeordnete Bauteile der Verbindungsvorrichtung, wie beispielsweise Zugankerabdeckungen, gebildet wird. Vorzugsweise ist an der mindestens einen maschinenseitigen Gehäuseöffnung und/oder an der mindestens einen getriebeseitigen Gehäuseöffnung eine jeweilige Dichtung zum Abdichten eines Spalts zwischen der mindestens einen Schneckenwelle und dem Gehäuse und/oder eines Spalts zwischen der mindestens einen Getriebewelle und dem Gehäuse angeordnet.

Die Verbindungsvorrichtung wird auch als Getriebelaterne bezeichnet. Die Verbindungsvorrichtung wird insbesondere im Pharmabereich eingesetzt. Eine Reinigung wird insbesondere bei einem Wechsel des aufzubereitenden Schüttguts bzw. einem Produktwechsel durchgeführt.

Eine Verbindungsvorrichtung nach Anspruch 1 gewährleistet eine einfache, effiziente und zuverlässige Reinigung. Das mindestens eine Reinigungselement ist vorzugsweise als Reinigungsdüse ausgebildet. Das mindestens eine Reinigungselement ist gegenüber dem Gehäuse abgedichtet, insbesondere in das Gehäuse integriert, so dass über das mindestens eine Reinigungselement ein Reinigungsfluid, insbesondere eine Reinigungsflüssigkeit, in den Innenraum zuführbar ist.

Eine Verbindungsvorrichtung nach Anspruch 2 gewährleistet eine einfache, effiziente und zuverlässige Reinigung. Dadurch, dass das mindestens eine Reinigungselement eine Sprühdüse umfasst bzw. als Sprühdüse ausgebildet ist, ist eine Spülung des Innenraums und/oder der den Innenraum begrenzenden Innenwand mittels der Reinigungsflüssigkeit durchführbar. Die Reinigungsflüssigkeit ist insbesondere Wasser. Vorzugsweise ist die Sprühdüse als Rotations-Sprühdüse ausgebildet. Die Rotations-Sprühdüse erzeugt einen Sprühkegel zum Spülen des Innenraums. Durch den Druck der Reinigungsflüssigkeit bzw. den Druck des Wassers wird der Sprühkegel in Rotation versetzt, so dass die Reinigungsflüssigkeit den Innenraum bzw. die den Innenraum begrenzende Innenwand benetzt. Hierdurch werden alle Verschmutzungen, insbesondere Stäube, mit der Reinigungsflüssigkeit bzw. mit dem Wasser benetzt und ausgespült bzw. abgespült. Das Bedienpersonal wird geschützt. Vorzugsweise ist die Sprühdüse an einem Gehäuseboden angeordnet. Hierdurch wird die Reinigungsflüssigkeit entgegen der Schwerkraft in den Innenraum zugeführt, wodurch eine gründliche Reinigung erzielt wird. Die Verbindungsvorrichtung weist beispielsweise genau eine Sprühdüse auf.

Eine Verbindungsvorrichtung nach Anspruch 3 gewährleistet eine einfache, effiziente und zuverlässige Reinigung. Die mittels des mindestens einen Reinigungselements abgereinigten Verschmutzungen können in einfacher Weise aus dem Innenraum durch die Abführöffnung abgeführt werden. Vorzugsweise ist an die Abführöffnung ein Behälter angeschlossen. In dem Behälter werden Verschmutzungen und/oder eine Reinigungsflüssigkeit gesammelt. Der Behälter ist insbesondere Teil eines Kreislaufsystems, das Verschmutzungen von der Reinigungsflüssigkeit trennt und die Reinigungsflüssigkeit zur erneuten Zuführung in den Innenraum aufbereitet. Zum Abführen kann die Abführöffnung insbesondere an eine Abführpumpe angeschlossen sein.

Eine Verbindungsvorrichtung nach Anspruch 4 gewährleistet eine einfache, effiziente und zuverlässige Reinigung. Dadurch, dass die Abführöffnung in dem Gehäuseboden ausgebildet ist, werden abgereinigte Verschmutzungen insbesondere zusammen mit einer Reinigungsflüssigkeit aufgrund der Schwerkraft aus dem Innenraum abgeführt. Vorzugsweise ist der Gehäuseboden zumindest bereichsweise derart schräg ausgebildet, dass die Reinigungsflüssigkeit aufgrund der Schwerkraft zusammen mit den abgereinigten Verschmutzungen zu der Abführöffnung läuft. Hierdurch können die Verschmutzungen in einfacher Weise in einen Behälter abgeführt werden, der an die Abführöffnung angeschlossen ist.

Eine Verbindungsvorrichtung nach Anspruch 5 gewährleistet eine einfache, effiziente und zuverlässige Reinigung. Über die mindestens eine Druckeinstellöffnung ist ein gewünschter Druck in dem Innenraum einstellbar. Über die mindestens eine Druckeinstellöffnung kann einerseits ein erwünschter Unterdruck in dem Innenraum erzeugt werden, um ein Austreten von Verschmutzungen bzw. Stäuben aus dem Innenraum in die Umgebung zu vermeiden. Andererseits kann ein unerwünschter Unterdruck durch das Abführen von Verschmutzungen aus dem Innenraum über eine Abführöffnung ausgeglichen werden. Die mindestens eine Druckeinstellöffnung ist insbesondere in einer Schwerkraftrichtung beabstandet zu einem Gehäuseboden ausgebildet. Beispielsweise ist die mindestens eine Druckeinstellöffnung in einer Gehäuseseitenwand und/oder einer Gehäusedeckwand ausgebildet. Hierdurch wird in unerwünschtes Abführen von Reinigungsflüssigkeit mit Verschmutzungen über die mindestens eine Druckeinstellöffnung vermieden.

Eine Verbindungsvorrichtung nach Anspruch 6 gewährleistet eine einfache, effiziente und zuverlässige Reinigung. Mittels der Druckeinstelleinrichtung ist der Druck in dem Innenraum über die mindestens eine Druckeinstellöffnung in einfacher Weise einstellbar. Hierdurch wird ein erwünschter Unterdruck derart erzeugt, dass einerseits Verschmutzungen aus dem Innenraum nicht in die Umgebung gelangen und andererseits Verschmutzungen aus dem Verfahrensteil der Schneckenmaschine nicht in den Innenraum gesaugt werden. Die Druckeinstelleinrichtung umfasst insbesondere eine Pumpe. Vorzugsweise umfasst die Druckeinstelleinrichtung einen Drucksensor zum Messen des Drucks in dem Innenraum. Der Drucksensor wirkt insbesondere mit der Pumpe zusammen.

Eine Verbindungsvorrichtung nach Anspruch 7 gewährleistet eine einfache, effiziente und zuverlässige Reinigung. Das Filterelement ist insbesondere in dem Innenraum angeordnet. Vorzugsweise ist das Filterelement in einer Strömungsrichtung vor der mindestens einen Druckeinstellöffnung angeordnet. Hierdurch können Verschmutzungen, die aufgrund der Einstellung eines Drucks in dem Innenraum über die mindestens eine Druckeinstellöffnung abgeführt werden würden, zurückgehalten werden. Weiterhin kann ein Filterelement zum Ausfiltern von Verschmutzungen aus dem Reinigungsfluid bzw. der Reinigungsflüssigkeit vorgesehen sein, das Teil eines Kreislaufsystems zur Wiederaufbereitung des Reinigungsfluids bzw. der Reinigungsflüssigkeit ist.

Eine Verbindungsvorrichtung nach Anspruch 8 gewährleistet eine einfache, effiziente und zuverlässige Reinigung. Im Pharmabereich werden die Gehäuseabschnitte der Schneckenmaschine mittels Zugankern miteinander verbunden, damit die Schneckenmaschine zur Reinigung einfach demontierbar ist. Die Zuganker sind insbesondere außenliegend an den Gehäuseabschnitten angeordnet. Die Zuganker werden durch zugehörige Zugankeröffnungen in den Innenraum geführt und an dem Gehäuse mittels Federelementen und Befestigungselementen verspannt und befestigt. Um eine aufwändige Reinigung der Federelemente, der Befestigungselemente und/oder der Zuganker zu vermeiden, weist die Verbindungsvorrichtung für den jeweiligen Zuganker eine zugehörige Zugankerabdeckung auf. Die jeweilige Zugankerabdeckung ist insbesondere topfförmig ausgebildet. Mittels der Zugankerabdeckungen werden die Zuganker, die Federelemente und die Befestigungselemente zur einfacheren Reinigung abgedeckt. Die jeweilige Zugankerabdeckung ist in dem Innenraum angeordnet und an dem Gehäuse befestigt. Vorzugsweise sind die Zugankerabdeckungen abgedichtet an dem Gehäuse befestigt. Der Innenraum wird somit bereichsweise durch die Zugankerabdeckungen begrenzt, die einen Teil der Innenwand bilden. Die Zugankerabdeckungen sind im Vergleich zu den Zugankern, den Federelementen und den Befestigungselementen einfach zu reinigen.

Eine Verbindungsvorrichtung nach Anspruch 9 gewährleistet eine einfache, effiziente und zuverlässige Reinigung. Im Pharmabereich werden die Gehäuseabschnitte der Schneckenmaschine mittels Zugankern miteinander verbunden, damit die Schneckenmaschine zur Reinigung einfach demontierbar ist. Dadurch, dass die Zugankeröffnungen sich nicht bis in den Innenraum erstrecken, wird der Innenraum im Bereich der Zugankeröffnungen durch das Gehäuse begrenzt. Der Innenraum und die den Innenraum begrenzende Innenwand sind somit einfach, effizient und zuverlässig zu reinigen. Die Zugankeröffnungen sind beispielsweise als Sacklochbohrungen ausgebildet. Vorzugsweise werden in den Zugankeröffnungen Zuganker verschraubt, die in den Gehäuseabschnitten der Schneckenmaschine innenliegend angeordnet sind. Hierdurch haben die Gehäuseabschnitte und die Zuganker im Wesentlichen eine gleiche Temperatur und somit eine gleiche Wärmeausdehnung, so dass die Zuganker nicht mittels Federelementen verspannt werden müssen.

Eine Verbindungsvorrichtung nach Anspruch 10 gewährleistet eine einfache, effiziente und zuverlässige Reinigung. Das Gehäuse ist mit Ausnahme der in dem Gehäuse ausgebildeten Öffnungen dicht ausgebildet, so dass kein Reinigungsfluid bzw. keine Reinigungsflüssigkeit austreten kann. Die Gehäuse-Klappe ermöglicht einen Zugang zu dem Innenraum. Hierdurch ist die Montage und Demontage der jeweiligen Wellenverbindung und/oder die Montage und Demontage der Zuganker möglich. Dadurch, dass die Gehäuse-Klappe mittels einer Dichtung gegenüber dem Gehäuse-Grundkörper abgedichtet ist, können Verschmutzungen nicht zwischen dem Gehäuse-Grundkörper und der Gehäuse-Klappe aus dem Innenraum austreten. Die Dichtung ist insbesondere als Silikondichtung ausgebildet. Die Dichtung ist insbesondere FDA-konform. Der Gehäuse-Grundkörper umfasst insbesondere einen Gehäuseboden, Gehäuseseitenwände und eine Gehäusedeckwand, die dicht miteinander verbunden sind.

Der automatische Verschluss ermöglicht eine Freigabe der Gehäuse-Klappe zum Öffnen erst dann, wenn mittels des mindestens einen Reinigungselements der Innenraum und/oder die den Innenraum begrenzende Innenwand von Verschmutzungen gereinigt wurden. Hierzu wirkt der automatische Verschluss vorzugsweise mit einer Steuereinrichtung zusammen, die in Abhängigkeit eines Reinigungssignals, das den Abschluss eines Reinigungsvorgangs kennzeichnet, ein Freigabesignal an den automatischen Verschluss übermittelt. Die Reinigung kann manuell und/oder mittels der Steuereinrichtung initiiert werden. Beispielsweise kann die Reinigung automatisch initiiert werden, wenn die Steuereinrichtung einen Stillstand der Schneckenmaschine erkennt. Hierdurch wird das Bedienpersonal vor giftigen Verschmutzungen geschützt.

Eine Verbindungsvorrichtung nach Anspruch 11 gewährleistet eine einfache, effiziente und zuverlässige Reinigung. Die Verbindungsvorrichtung weist eine Innenwand auf, die den Innenraum begrenzt. Die Innenwand wird insbesondere gebildet durch das Gehäuse, ein Filterelement zum Ausfiltern der Verschmutzungen und Zugankerabdeckungen. Die Innenwand weist eine Gesamtfläche A_{B} auf. Ein Teil der Gesamtfläche A_{B} kann eine Reinigungsflüssigkeit-Standfläche A_{S} ausbilden. Die Reinigungsflüssigkeit-Standfläche A_{S} verläuft relativ zu einer Schwerkraftrichtung senkrecht, und nicht hängend. Die Reinigungsflüssigkeit-Standfläche A_{S} ermöglicht somit ein unerwünschtes Verbleiben von Reinigungsflüssigkeit an der Innenwand. Die Innenwand ist derart ausgebildet, dass die Reinigungsflüssigkeit-Standfläche A_{S} im Verhältnis zu der Gesamtfläche A_{B} möglichst klein, vorzugsweise Null ist. Hierzu weist die Innenwand möglichst ausschließlich Wandabschnitte auf, die relativ zu einer horizontalen Richtung schräg bzw. relativ zu der Schwerkraftrichtung nicht senkrecht verlaufen. Hierdurch ist ein zuverlässiges Ablaufen der Reinigungsflüssigkeit mit den Verschmutzungen gewährleistet. Verbindungsstellen im Innenraum bzw. der Innenwand werden vorzugsweise spaltfrei ausgebildet.

Eine Verbindungsvorrichtung nach Anspruch 12 gewährleistet eine einfache, effiziente und zuverlässige Reinigung. Mittels der Steuereinrichtung werden das Betätigen des mindestens einen Reinigungselements und/oder das Betätigen eines automatischen Verschlusses zur Freigabe einer Gehäuse-Klappe gesteuert. Die Reinigung des Innenraums und/oder der den Innenraum begrenzenden Innenwand wird insbesondere automatisch gestartet, wenn ein Abschalten bzw. ein Stillstand der Schneckenmaschine festgestellt wird. Nach der Beendigung der Reinigung wird mittels der Steuereinrichtung beispielsweise der automatische Verschluss freigegeben.

Der Erfindung liegt ferner die Aufgabe zugrunde, eine Anlage zur Aufbereitung von Schüttgut zu schaffen, die einfach, effizient und zuverlässig zu reinigen ist.

Diese Aufgabe wird durch eine Anlage mit den Merkmalen des Anspruchs 13 gelöst. Die Vorteile der erfindungsgemäßen Anlage entsprechen den bereits beschriebenen Vorteilen der erfindungsgemäßen Verbindungsvorrichtung. Mittels der Verbindungsvorrichtung werden insbesondere auch die mindestens eine Getriebewelle und die mindestens eine Schneckenwelle mit der zugehörigen Wellenverbindung, die sich in dem Innenraum befinden, gereinigt. Die Schneckenmaschine ist insbesondere als Mehrwellen-Schneckenmaschine mit gleichsinnig drehantreibbaren bzw. drehangetriebenen Schneckenwellen ausgebildet. Vorzugsweise ist die Schneckenmaschine als Zweiwellen-Schneckenmaschine ausgebildet. Die Anlage umfasst vorzugsweise einen Antriebsmotor. Die Anlage wird insbesondere im Pharmabereich eingesetzt und dient zur Aufbereitung von pulverförmigem Schüttgut.

Der Erfindung liegt ferner die Aufgabe zugrunde, ein Verfahren zur einfachen, effizienten und zuverlässigen Reinigung einer Verbindungsvorrichtung zum Verbinden einer Schneckenmaschine mit einem Getriebe zu schaffen.

Diese Aufgabe wird durch ein Verfahren mit den Merkmalen des Anspruchs 14 gelöst. Die Vorteile des erfindungsgemäßen Verfahrens entsprechen den bereits beschriebenen Vorteilen der erfindungsgemäßen Verbindungsvorrichtung. Das Verfahren kann insbesondere auch auf eine Anlage gemäß Anspruch 13 angewendet werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht einer Anlage zur Aufbereitung von Schüttgut mit einer Verbindungsvorrichtung zum Verbinden einer Schneckenmaschine mit einem Getriebe gemäß einem ersten Ausführungsbeispiel,
- Fig. 2: eine erste perspektivische Ansicht der Verbindungsvorrichtung ohne das Getriebe und die Schneckenmaschine,
- Fig. 3: eine zweite perspektivische Ansicht der Verbindungsvorrichtung mit dem Getriebe und der Schneckenmaschine ohne eine Gehäuse-Klappe zur Veranschaulichung eines Innenraums,
- Fig. 4: einen Vertikalschnitt durch die Verbindungsvorrichtung in Fig. 3, und
- Fig. 5: eine perspektivische Ansicht einer Verbindungsvorrichtung gemäß einem zweiten Ausführungsbeispiel.

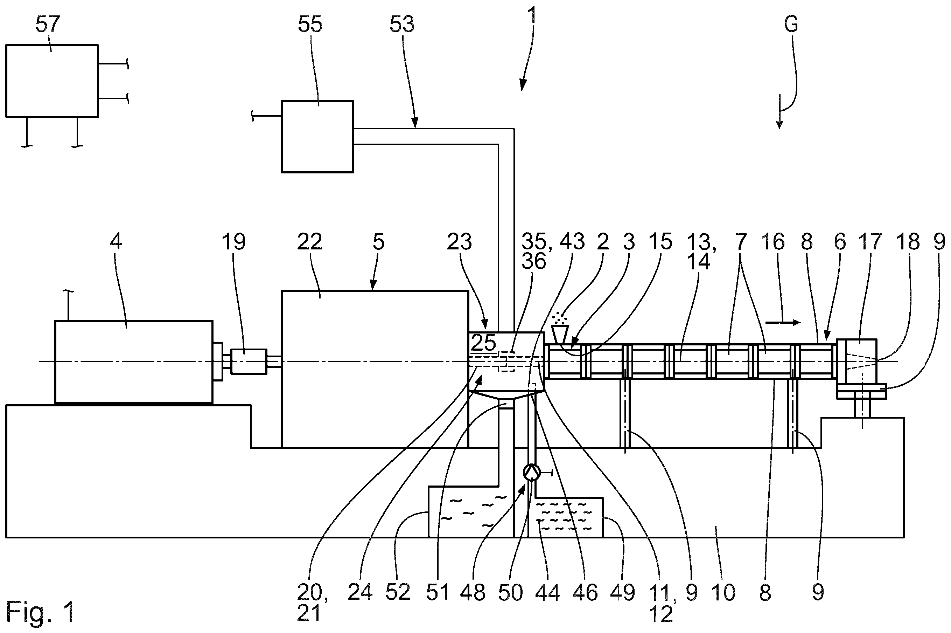

Nachfolgend ist anhand der Figuren 1 bis 4 ein erstes Ausführungsbeispiel der Erfindung beschrieben. Eine in Fig. 1 veranschaulichte Anlage 1 zur Aufbereitung von pulverförmigem Schüttgut 2 dient zum Einsatz im Pharmabereich. Die Anlage 1 umfasst eine Mehrwellen-Schneckenmaschine 3, die mittels eines elektrischen Antriebsmotors 4 über ein Getriebe 5 drehantreibbar ist.

Die Schneckenmaschine 3 weist ein Maschinengehäuse 6 auf, das aus mehreren Gehäuseabschnitten 7 zusammengesetzt ist. Die Gehäuseabschnitte 7 sind mittels mehrerer Zuganker 8 miteinander verspannt und verbunden. Die Schneckenmaschine 3 umfasst beispielsweise vier Zuganker 8. Das Maschinengehäuse 6 ist mittels Stützen 9 gegenüber einem Untergestellt 10 abgestützt.

Die Schneckenmaschine 3 ist als Zweiwellen-Schneckenmaschine ausgebildet. Das Maschinengehäuse 6 weist zwei einander durchdringende und nicht näher dargestellte Gehäusebohrungen auf, die im Querschnitt die Form einer liegenden Acht haben. In den Gehäusebohrungen sind Schneckenwellen 11, 12 angeordnet, die um zugehörige Drehachsen 13, 14 gleichsinnig drehantreibbar sind. Die Schneckenwellen 11, 12 sind in üblicher Weise ausgebildet.

Zum Zuführen des Schüttguts 2 in die Gehäusebohrungen der Schneckenmaschine 3 ist in dem ersten Gehäuseabschnitt 7 eine Zuführöffnung 15 ausgebildet. Mittels der Schneckenwellen 11, 12 wird das Schüttgut 2 in einer Förderrichtung 16 transportiert und aufbereitet. Das aufbereitete Schüttgut 2 wird durch eine in einer Düsenplatte 17 ausgebildete Austragsöffnung 18 ausgetragen. Die Düsenplatte 17 ist endseitig an dem letzten Gehäuseabschnitt 7 befestigt.

Das Getriebe 5 ist als Untersetzungs- und Verzweigungsgetriebe ausgebildet. Das Getriebe 5 ist antriebsseitig mit dem Antriebsmotor 4 über eine Kupplung 19 gekoppelt. Zum Antreiben der Schneckenwellen 11, 12 weist das Getriebe 5 zwei Getriebewellen 20, 21 auf. Die Getriebewellen 20, 21 erstrecken sich aus einem Getriebegehäuse 22 des Getriebes 5.

Die Schneckenmaschine 3 und das Getriebe 5 sind mittels einer Verbindungsvorrichtung 23 miteinander verbunden. Die Verbindungsvorrichtung 23 wird auch als Getriebelaterne bezeichnet. Die Verbindungsvorrichtung 23 umfasst ein Gehäuse 24, das mit dem Getriebegehäuse 22 und der Schneckenmaschine 3 verbunden ist. Das Gehäuse 24 begrenzt bereichsweise einen Innenraum 25.

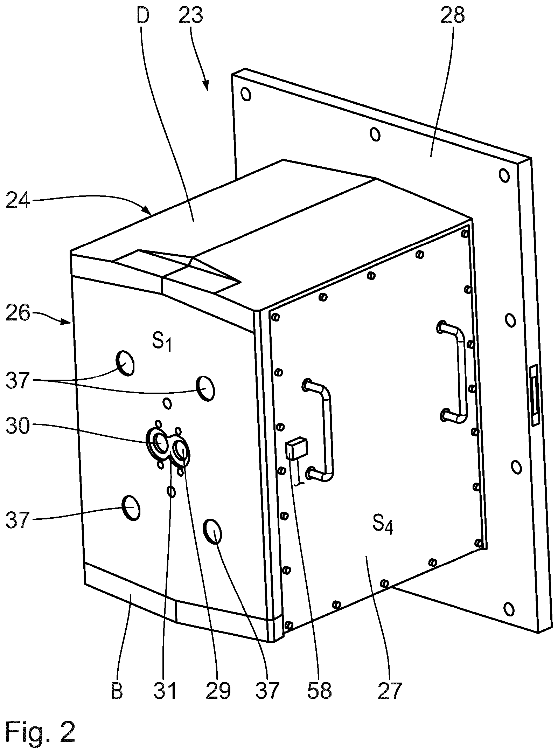

Das in Fig. 2 veranschaulichte Gehäuse 24 umfasst einen Gehäuse-Grundkörper 26 und eine daran befestigte Gehäuse-Klappe 27. Der Gehäuse-Grundkörper 26 wird durch einen Gehäuseboden B, durch Gehäuseseitenwände S₁, S₂ und S₃ sowie durch eine Gehäusedeckwand D gebildet. Die Gehäuse-Klappe 27 bildet eine weitere Gehäuseseitenwand S₄. An der Gehäuseseitenwand S₃ ist eine Verbindungsplatte 28 befestigt, mittels der das Gehäuse 24 an dem Getriebegehäuse 22 befestigt ist.

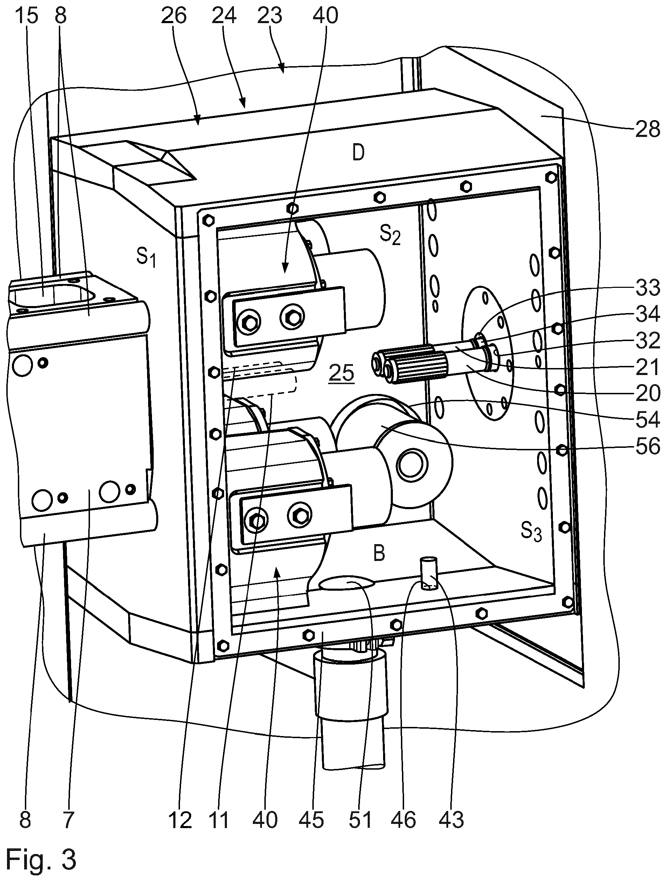

Zum Einführen der Schneckenwellen 11, 12 in den Innenraum 25 sind in der Gehäuseseitenwand S₁ zwei maschinenseitige Gehäuseöffnungen 29, 30 ausgebildet. Die Schneckenwellen 11, 12 sind durch die maschinenseitigen Gehäuseöffnungen 29, 30 in den Innenraum 25 geführt und gegenüber der Gehäuseseitenwand S₁ mittels einer Dichtung 31 abgedichtet. Zum Einführen der Getriebewellen 20, 21 sind in der Gehäuseseitenwand S₃ getriebeseitige Gehäuseöffnungen 32, 33 ausgebildet. Durch die getriebeseitigen Gehäuseöffnungen 32, 33 sind die Getriebewellen 20, 21 in den Innenraum 25 geführt und mittels einer Dichtung 34 gegenüber der Gehäuseseitenwand S₃ abgedichtet. In dem Innenraum 25 sind die Getriebewellen 20, 21 mittels Wellenverbindungen 35, 36 mit den zugehörigen Schneckenwellen 11, 12 verbunden. Die Wellenverbindungen 35, 36 sind als Kupplungshülsen ausgebildet. Fig. 3 veranschaulicht den Innenraum 25, jedoch sind die Wellenverbindungen 35, 36 nicht dargestellt.

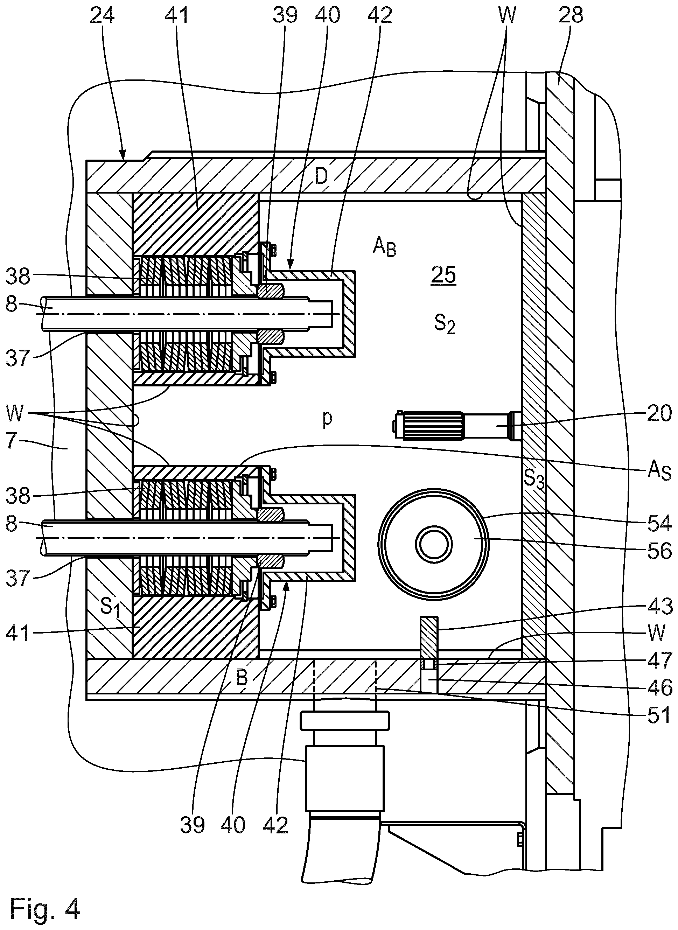

Die Schneckenmaschine 3 ist mittels der Zuganker 8 an dem Gehäuse 24 befestigt. Hierzu sind in der Gehäuseseitenwand S₁ Zugankeröffnungen 37 ausgebildet. Die Zuganker 8 sind durch die Zugankeröffnungen 37 in den Innenraum 25 geführt. Die Zuganker 8 sind in dem Innenraum 25 mittels Federelementen 38 und Befestigungselementen 39 gegenüber dem Gehäuse 24 verspannt und an diesem befestigt. Dies ist in Fig. 4 veranschaulicht.

Die Zuganker 8 sind in dem Innenraum 25 mittels Zugankerabdeckungen 40 vollständig abgedeckt. Die Zugankerabdeckungen 40 sind zweiteilig ausgebildet. Die Zugankerabdeckungen 40 weisen jeweils ein rohrförmiges erstes Abdeckteil 41 und ein kappenartiges zweites Abdeckteil 42 auf. Das jeweilige erste Abdeckteil 41 ist mit dem Gehäuse 24 dicht verbunden. Beispielsweise ist das jeweilige erste Abdeckteil 41 mit der Seitenwand S₁ und dem Gehäuseboden B bzw. mit der Gehäuseseitenwand S₁ und mit der Gehäusedeckwand D verschweißt. Das zugehörige zweite Abdeckteil 42 ist fest und dicht, jedoch lösbar an dem ersten Abdeckteil 41 befestigt.

Zur Reinigung des Innenraums 25 und einer den Innenraum 25 begrenzenden Innenwand W weist die Verbindungsvorrichtung 23 ein Reinigungselement 43 auf. Das Reinigungselement 43 ist in die Verbindungsvorrichtung 23 integriert, so dass eine Reinigung durchführbar ist, ohne dass die Gehäuse-Klappe 27 geöffnet werden muss. Das Reinigungselement 43 ist an dem Gehäuseboden B angeordnet. Das Reinigungselement 43 ist als Rotations-Sprühdüse ausgebildet und dient zum Versprühen eines Reinigungsfluids bzw. einer Reinigungsflüssigkeit 44. Die Gehäuse-Klappe 27 ist gegenüber dem Gehäuse-Grundkörper 26 mittels einer Dichtung 45 abgedichtet.

Zur Versorgung des Reinigungselements 43 mit der Reinigungsflüssigkeit 44 ist in dem Gehäuseboden B eine Versorgungsöffnung 46 ausgebildet. Das Reinigungselement 43 ist in der Versorgungsöffnung 46 an dem Gehäuseboden B befestigt und gegenüber diesem mittels einer Dichtung 47 abgedichtet. Zur Versorgung des Reinigungselements 43 umfasst die Verbindungsvorrichtung 23 eine Versorgungseinrichtung 48, die über die Versorgungsöffnung 46 mit dem Reinigungselement 43 verbunden ist. Die Versorgungseinrichtung 48 umfasst einen Vorratsbehälter 49 zur Bereitstellung der Reinigungsflüssigkeit 44 sowie eine Versorgungspumpe 50 zum Fördern der Reinigungsflüssigkeit 44 von dem Versorgungsbehälter 49 zu dem Reinigungselement 43. Die Reinigungsflüssigkeit 44 ist beispielsweise Wasser.

Zum Abführen der Reinigungsflüssigkeit 44 und von abgereinigten Verschmutzungen aus dem Innenraum 25 ist in dem Gehäuseboden B eine Abführöffnung 51 ausgebildet. Der Gehäuseboden B verläuft zu der Abführöffnung 51 in einer Schwerkraftrichtung G schräg nach unten, so dass die Reinigungsflüssigkeit 44 aufgrund der Schwerkraft zu der Abführöffnung 51 läuft. Die Abführöffnung 51 ist mit einem Sammelbehälter 52 verbunden. Der Sammelbehälter 52 dient zum Sammeln der aus dem Innenraum 25 abgeführten Reinigungsflüssigkeit 44 und den darin befindlichen Verschmutzungen.

Zum Einstellen eines Drucks p in dem Innenraum 25 umfasst die Verbindungsvorrichtung 23 eine Druckeinstelleinrichtung 53. Die Druckeinstelleinrichtung 53 ist an eine Druckeinstellöffnung 54 angeschlossen. Die Druckeinstellöffnung 54 ist beabstandet zu dem Gehäuseboden B in der Gehäuseseitenwand S₂ ausgebildet. Die Druckeinstelleinrichtung 53 umfasst eine Pumpe 55, die außerhalb des Innenraums 25 angeordnet und über eine Leitung an die Druckeinstellöffnung 54 angeschlossen ist. Ferner umfasst die Druckeinstelleinrichtung 53 ein Filterelement 56, das in dem Innenraum 25 angeordnet ist. Das Filterelement 56 ist in einer Strömungsrichtung zu der Pumpe 55 vor der Druckeinstellöffnung 54 angeordnet.

Die den Innenraum 25 begrenzende Innenwand W wird im Wesentlichen durch das Gehäuse 24, die Zugankerabdeckungen 40 und das Filterelement 56 ausgebildet. Um ein zuverlässiges Abführen der Reinigungsflüssigkeit 44 zu gewährleisten, weist die Innenwand W im Wesentlichen keine Reinigungsflüssigkeit-Standfläche As auf, die bezogen auf die Schwerkraftrichtung G senkrecht und nicht hängend verläuft. Für ein Verhältnis der Reinigungsflüssigkeit-Standfläche As zu einer Gesamtfläche A_{B} der Innenwand W gilt: 0 ≤ A_{S}/A_{B} ≤ 0,1, insbesondere 0,001 ≤ A_{S}/A_{B} ≤ 0,05, und insbesondere 0,005 ≤ A_{S}/A_{B} ≤ 0,01.

Die Verbindungsvorrichtung 23 umfasst eine Steuereinrichtung 57. Die Steuereinrichtung 57 ist Teil einer übergeordneten und nicht näher dargestellten Steuereinheit der Anlage 1. Die Steuereinrichtung 57 ist in Fig. 1 lediglich schematisch veranschaulicht. Die Steuereinrichtung 57 dient zur Steuerung der Reinigung des Innenraums 25. Hierzu ist die Steuereinrichtung 57 in Signalverbindung mit der Versorgungseinrichtung 48, der Druckeinstelleinrichtung 53 und dem Antriebsmotor 4. Weiterhin ist die Steuereinrichtung 57 in Signalverbindung mit einem automatischen Verschluss 58, der zur Blockierung oder Freigabe der Gehäuse-Klappe 27 dient.

Die Funktionsweise der Anlage 1 ist wie folgt:
Im Betrieb der Anlage 1 wird das pulverförmige Schüttgut 2 über die Zuführöffnung 15 in die Gehäusebohrungen der Schneckenmaschine 3 zugeführt. Die Schneckenwellen 11, 12 werden über die Getriebewellen 20, 21 von dem Antriebsmotor 4 drehangetrieben. Die Steuereinrichtung 57 steuert den automatischen Verschluss 58 derart an, dass das Öffnen der Gehäuse-Klappe 27 blockiert ist.

Durch die maschinenseitigen Gehäuseöffnungen 29, 30 gelangt das pulverförmige Schüttgut 2 in den Innenraum 25 und verschmutzt diesen. Um ein Austreten dieser Verschmutzungen aus dem Innenraum 25 zu vermeiden, wird mittels der Druckeinstelleinrichtung 53 in dem Innenraum 25 ein im Vergleich zu einem Umgebungsdruck geringerer Druck p, also ein Unterdruck, eingestellt. Der Druck p ist derart, dass die Verschmutzungen einerseits nicht in die Umgebung entweichen können und andererseits das Eintreten von pulverförmigem Schüttgut 2 durch die maschinenseitigen Gehäuseöffnungen 29, 30 nicht verstärkt wird. Das Filterelement 56 gewährleistet, dass die Verschmutzungen nicht durch die Druckeinstellöffnung 54 zu der Pumpe 55 entweichen.

Bei einem Produktwechsel muss die Anlage 1 gereinigt werden. Hierzu wird der Antriebsmotor 4 angehalten, so dass die Schneckenwellen 11, 12 zum Stillstand kommen. Der Stillstand des Antriebsmotors 4 bzw. der Schneckenmaschine 3 wird von der Steuereinrichtung 57 erkannt, die daraufhin eine automatische Reinigung des Innenraums 25 und der Innenwand W startet. Hierzu wird mittels der Versorgungspumpe 50 Reinigungsflüssigkeit 44 zu dem Reinigungselement 43 gefördert. Das Reinigungselement 43 versprüht die Reinigungsflüssigkeit 44 in dem Innenraum 25. Hierzu erzeugt das Reinigungselement 43 einen Sprühkegel, der aufgrund des Drucks der Reinigungsflüssigkeit 44 in Rotation versetzt wird und die gesamte Innenwand W benetzt. Durch die Reinigungsflüssigkeit 44 werden die Verschmutzungen von der Innenwand W abgespült und aus dem Innenraum 25 abgeführt. Die Reinigungsflüssigkeit 44 mit den Verschmutzungen läuft aufgrund der Schwerkraft zu dem Gehäuseboden B und von dort aufgrund der schrägen Ausbildung zu der Abführöffnung 51. Da die Reinigungsflüssigkeit-Standfläche As im Wesentlichen gleich Null ist, wird die Reinigungsflüssigkeit 44 mit den Verschmutzungen vollständig durch die Abführöffnung 51 aus dem Innenraum 25 abgeführt. Die Reinigungsflüssigkeit 44 mit den Verschmutzungen wird in dem Sammelbehälter 52 gesammelt und anschließend entsorgt. Durch das Abführen der Reinigungsflüssigkeit 44 wird ein zusätzlicher Unterdruck erzeugt, der mittels der Druckeinstelleinrichtung 53 in gewünschter Weise ausgeglichen wird.

Nach Abschluss der Reinigung steuert die Steuereinrichtung 57 den automatischen Verschluss 58 derart an, dass die Gehäuse-Klappe 27 freigegeben wird und geöffnet werden kann. Das Bedienpersonal kann nun die Gehäuse-Klappe 27 gefahrlos öffnen und zur Reinigung der Schneckenmaschine 3 die Zugankerabdeckungen 40 und die Zuganker 8 demontieren. Die Anlage 1 sowie die Verbindungsvorrichtung 23 eignen sich insbesondere zum Einsatz im Pharmabereich. Im Pharmabereich werden auch giftige Wirkstoffe als Schüttgut 2 verarbeitet, die in den Innenraum 25 gelangen. Durch die Reinigung werden unerwünschte und gefährliche Verschmutzungen bzw. Stäube vor dem Öffnen der Gehäuse-Klappe 27 gebunden und aus dem Innenraum 25 abgeführt. Das Filterelement 56 bindet die Verschmutzungen und ist auswechselbar. Das Filterelement 56 ist insbesondere als HEPA-Filter (High Efficiency Particulate Air Filter) ausgebildet. Vor einem erneuten Betrieb der Anlage 1 wird das Filterelement 56 durch ein ungebrauchtes Filterelement 56 ersetzt.

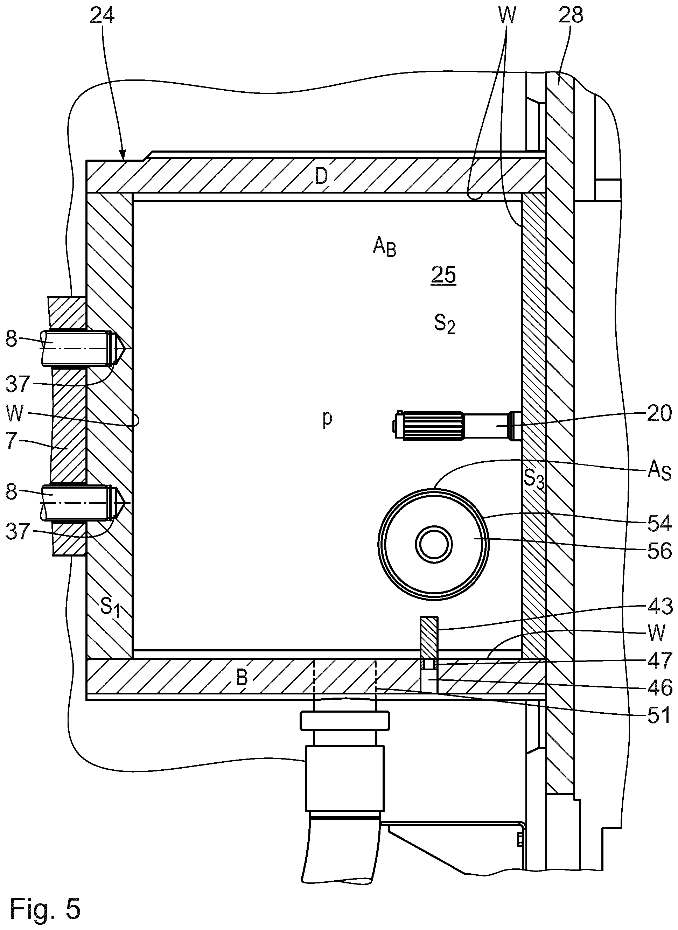

Nachfolgend ist anhand von Figur 5 ein zweites Ausführungsbeispiel der Erfindung beschrieben. Im Unterschied zu dem ersten Ausführungsbeispiel erstrecken sich die Zugankeröffnungen 37 nicht bis in den Innenraum 25, so dass die Zugankeröffnungen 37 als Sacklochbohrungen ausgebildet sind. Der Innenraum 25 wird somit im Bereich der Zuganker 8 durch die Gehäuseseitenwand Si begrenzt. Die Zuganker 8 sind innenliegend in den Gehäuseabschnitten 7 angeordnet, so dass die Gehäuseabschnitte 7 und die Zuganker 8 im Wesentlichen die gleiche Temperatur und die gleiche Wärmeausdehnung haben. Federelemente zum Verspannen der Zuganker 8 und Zugankerabdeckungen sind nicht erforderlich. Hinsichtlich des weiteren Aufbaus und der weiteren Funktionsweise wird auf das vorangegangene Ausführungsbeispiel verwiesen.

## Patentansprüche

1. Verbindungsvorrichtung zum Verbinden einer Schneckenmaschine mit einem Getriebe umfassend
- ein Gehäuse (24),
-- das einen Innenraum (25) zum Anordnen mindestens einer Wellenverbindung (35, 36) zwischen mindestens einer Getriebewelle (20, 21) und mindestens einer Schneckenwelle (11, 12) zumindest bereichsweise begrenzt,
-- das mindestens eine getriebeseitige Gehäuseöffnung (32, 33) zum Einführen der mindestens einen Getriebewelle (20, 21) und mindestens eine maschinenseitige Gehäuseöffnung (29, 30) zum Einführen der mindestens einen Schneckenwelle (11, 12) in den Innenraum (25) umfasst,
- mindestens ein Reinigungselement (43) zum Reinigen des Innenraums (25) und einer den Innenraum (25) begrenzenden Innenwand (W) von Verschmutzungen,
**dadurch gekennzeichnet,**
**dass** das mindestens eine Reinigungselement (43) in dem Innenraum (25) angeordnet ist,
**dass** das mindestens eine Reinigungselement (43) gegenüber dem Gehäuse (24) abgedichtet ist.

2. Verbindungsvorrichtung nach Anspruch 1, **dadurch gekennzeichnet, dass** das mindestens eine Reinigungselement (43) eine Sprühdüse zum Versprühen einer Reinigungsflüssigkeit (44) in dem Innenraum (25) umfasst.

3. Verbindungsvorrichtung nach einem der Ansprüche 1 bis 2, **dadurch gekennzeichnet,**
**dass** in dem Gehäuse (24) eine Abführöffnung (51) zum Abführen von Verschmutzungen aus dem Innenraum (25) ausgebildet ist.

4. Verbindungsvorrichtung nach Anspruch 3, **dadurch gekennzeichnet, dass** die Abführöffnung (51) in einem Gehäuseboden (B) ausgebildet ist.

5. Verbindungsvorrichtung nach einem der Ansprüche 1 bis 4, **dadurch gekennzeichnet,**
**dass** in dem Gehäuse (24) mindestens eine Druckeinstellöffnung (54) zum Einstellen eines Drucks (p) in dem Innenraum (25) ausgebildet ist.

6. Verbindungsvorrichtung nach Anspruch 5, **dadurch gekennzeichnet, dass** die mindestens eine Druckeinstellöffnung (54) mit einer Druckeinstelleinrichtung (53) verbunden ist.

7. Verbindungsvorrichtung nach einem der Ansprüche 1 bis 6, **gekennzeichnet**
**durch** ein Filterelement (56) zum Ausfiltern der Verschmutzungen.

8. Verbindungsvorrichtung nach einem der Ansprüche 1 bis 7, **dadurch gekennzeichnet,**
**dass** in dem Gehäuse (24) mehrere Zugankeröffnungen (37) zum Befestigen von Zugankern (8) der Schneckenmaschine (3) ausgebildet sind und die Zugankeröffnungen (37) in dem Innenraum (25) durch zugehörige Zugankerabdeckungen (40) abgedeckt sind.

9. Verbindungsvorrichtung nach einem der Ansprüche 1 bis 7, **dadurch gekennzeichnet,**
**dass** in dem Gehäuse (24) mehrere Zugankeröffnungen (37) zum Befestigen von Zugankern (8) der Schneckenmaschine (3) ausgebildet sind und die Zugankeröffnungen (37) zu dem Innenraum (25) verschlossen sind.

10. Verbindungsvorrichtung nach einem der Ansprüche 1 bis 9, **dadurch gekennzeichnet,**
**dass** das Gehäuse (24) einen Gehäuse-Grundkörper (26) und eine Gehäuse-Klappe (27) zum Öffnen und Schließen umfasst, die gegenüber dem Gehäuse-Grundkörper (26) abgedichtet ist, wobei insbesondere an dem Gehäuse (24) zur Freigabe der Gehäuse-Klappe (27) ein automatischer Verschluss (58) angeordnet ist.

11. Verbindungsvorrichtung nach einem der Ansprüche 1 bis 10, **dadurch gekennzeichnet,**
**dass** für ein Verhältnis einer senkrecht zu einer Schwerkraftrichtung verlaufenden Reinigungsflüssigkeit-Standfläche A_{S} zu einer Gesamtfläche A_{B} einer den Innenraum (25) begrenzenden Innenwand (W) gilt: 0 ≤ A_{S}/A_{B} ≤ 0,1, insbesondere 0,001 ≤ A_{S}/A_{B} ≤ 0,05, und insbesondere 0,005 ≤ A_{S}/A_{B} ≤ 0,01.

12. Verbindungsvorrichtung nach einem der Ansprüche 1 bis 11, **gekennzeichnet**
**durch** eine Steuereinrichtung (57) zur Steuerung der Reinigung des Innenraums (25).

13. Anlage zur Aufbereitung von Schüttgut umfassend
- ein Getriebe (5) mit mindestens einer Getriebewelle (20, 21),
- eine Schneckenmaschine (3) mit mindestens einer Schneckenwelle (11, 12), und
- eine Verbindungsvorrichtung (23) nach einem der Ansprüche 1 bis 12, wobei die mindestens eine Getriebewelle (20, 21) in dem Innenraum (25) mittels einer jeweiligen Wellenverbindung (35, 36) mit der mindestens einen Schneckenwelle (11, 12) verbunden ist.

14. Verfahren zur Reinigung einer Verbindungsvorrichtung zum Verbinden einer Schneckenmaschine mit einem Getriebe mit den Schritten:
- Bereitstellen einer Verbindungsvorrichtung (23) nach einem der Ansprüche 1 bis 12, und
- Reinigen des Innenraums (25) und einer den Innenraum (25) begrenzenden Innenwand (W) durch Betätigen des mindestens einen Reinigungselements (43).

## Claims

1. Connecting device for connecting a screw machine to a gear mechanism, comprising
- a housing (24),
-- which at least in regions delimits an interior (25) for arrangement of at least one shaft connection (35, 36) between at least one gearbox shaft (20, 21) and at least one screw shaft (11, 12),
-- which comprises at least one gear-side housing opening (32, 33) for insertion of the at least one gear shaft (20, 21) and at least one machine-side housing opening (29, 30) for insertion of the at least one screw shaft (11, 12) into the interior (25),
- at least one cleaning element (43) for cleaning contaminants from the interior (25) and from an inner wall (W) delimiting the interior (25),
**characterized**
**in that** the at least one cleaning element (43) is arranged in the interior (25),
**in that** the at least one cleaning element (43) is sealed relative to the housing (24).

2. Connecting device according to claim 1, **characterized in that** the at least one cleaning element (43) comprises a spray nozzle for spraying a cleaning fluid (44) into the interior (25).

3. Connecting device according to any one of claims 1 to 2, **characterized in that**
a discharge opening (51) for discharging contaminants from the interior (25) is formed in the housing (24).

4. Connecting device according to claim 3, **characterized in that** the discharge opening (51) is formed in a housing floor (B).

5. Connecting device according to any of claims 1 to 4, **characterized in that**
at least one pressure setting opening (54) is formed in the housing (24) for setting a pressure (p) in the interior (25).

6. Connecting device according to claim 5, **characterized in that** the at least one pressure setting opening (54) is connected to a pressure setting device (53).

7. Connecting device according to any of claims 1 to 6, **characterized by** a filter element (56) for filtering out contaminants.

8. Connecting device according to any of claims 1 to 7, **characterized in that**
several tie rod openings (37) are formed in the housing (24) for fixing tie rods (8) of the screw machine (3), and the tie rod openings (37) are covered by associated tie rod covers (40) in the interior (25).

9. Connecting device according to any of claims 1 to 7, **characterized in that**
several tie rod openings (37) are formed in the housing (24) for fixing tie rods (8) of the screw machine (3), and the tie rod openings (37) are closed towards the interior (25).

10. Connecting device according to any of claims 1 to 9, **characterized in that**
the housing (24) comprises a housing base body (26) and a housing flap (27) for opening and closing, which is sealed relative to the housing base body (26), wherein in particular an automatic locking device (58) is arranged on the housing (24) for releasing the housing flap (27).

11. Connecting device according to any of claims 1 to 10, **characterized in that**
a ratio of a cleaning fluid standing surface area A_{S} running perpendicularly to the direction of gravity, to a total surface area A_{B} of an inner wall (W) delimiting the interior (25), is 0 ≤ A_{S}/A_{B} ≤ 0.1, in particular 0.001 ≤ A_{S}/A_{B} ≤ 0.05, and in particular 0.005 ≤ A_{S}/A_{B} ≤ 0.01.

12. Connecting device according to any of claims 1 to 11, **characterized by**
a control device (57) for controlling the cleaning of the interior (25).

13. System for preparing bulk product, comprising
- a gear mechanism (5) with at least one gear shaft (20, 21),
- a screw machine (3) with at least one screw shaft (11, 12), and
- a connecting device (23) according to any of claims 1 to 12, wherein the at least one gear shaft (20, 21) is connected to the at least one screw shaft (11, 12) in the interior (25) by means of a respective shaft connection (35, 36).

14. Method for cleaning a connecting device for connecting a screw machine to a gear mechanism, with the steps:
- provision of a connecting device (23) according to any of claims 1 to 12, and
- cleaning of the interior (25) and of the inner wall (W) delimiting the interior (25) by actuation of the at least one cleaning element (43).

## Revendications

1. Dispositif de raccordement destiné à raccorder une machine à vis sans fin à un engrenage comprenant
- un boîtier (24),
-- qui délimite au moins par zones un espace intérieur (25) pour disposer au moins une liaison d'arbre (35, 36) entre au moins un arbre d'engrenage (20, 21) et au moins un arbre à vis sans fin (11, 12),
-- qui comprend au moins une ouverture de boîtier (32, 33) côté engrenage pour l'introduction dudit au moins un arbre d'engrenage (20, 21) et au moins une ouverture de boîtier (29, 30) côté machine pour l'introduction dudit au moins un arbre à vis sans fin (11, 12) dans l'espace intérieur (25),
- au moins un élément de nettoyage (43) pour nettoyer l'espace intérieur (25) et une paroi intérieure (W) délimitant l'espace intérieur (25) des salissures,
**caractérisé en ce**
**que** ledit au moins un élément de nettoyage (43) est disposé dans l'espace intérieur (25),
**que** ledit au moins un élément de nettoyage (43) est étanché contre le boîtier (24).

2. Dispositif de raccordement selon la revendication 1, **caractérisé en ce que** ledit au moins un élément de nettoyage (43) comprend une buse de pulvérisation pour pulvériser un liquide de nettoyage (44) dans l'espace intérieur (25).

3. Dispositif de raccordement selon l'une quelconque des revendications 1 à 2, **caractérisé en ce**
**qu'**une ouverture d'évacuation (51) est formée dans le boîtier (24) pour évacuer les salissures de l'espace intérieur (25).

4. Dispositif de raccordement selon la revendication 3, **caractérisé en ce que** l'ouverture d'évacuation (51) est réalisée dans un fond de boîtier (B).

5. Dispositif de raccordement selon l'une quelconque des revendications 1 à 4, **caractérisé en ce**
**qu'**au moins une ouverture de réglage de pression (54) est formée dans le boîtier (24) pour régler une pression (p) dans l'espace intérieur (25).

6. Dispositif de raccordement selon la revendication 5, **caractérisé en ce que** ledit au moins une ouverture de réglage de pression (54) est reliée à un dispositif de réglage de pression (53).

7. Dispositif de raccordement selon l'une quelconque des revendications 1 à 6, **caractérisé**
**par** un élément filtrant (56) pour filtrer les salissures.

8. Dispositif de raccordement selon l'une quelconque des revendications 1 à 7, **caractérisé en ce**
**que** plusieurs ouvertures de tirant (37) sont formées dans le boîtier (24) pour la fixation de tirants (8) de la machine à vis sans fin (3) et que les ouvertures de tirant (37) sont recouvertes dans l'espace intérieur (25) par des couvercles de tirant (40) associés.

9. Dispositif de raccordement selon l'une quelconque des revendications 1 à 7, **caractérisé en ce**
**que** plusieurs ouvertures de tirant (37) sont formées dans le boîtier (24) pour la fixation de tirants (8) de la machine à vis sans fin (3) et les ouvertures de tirant (37) sont fermées vers l'espace intérieur (25).

10. Dispositif de raccordement selon l'une quelconque des revendications 1 à 9, **caractérisé en ce**
**que** le boîtier (24) comprend un corps de base de boîtier (26) et un clapet de boîtier (27) pour l'ouverture et la fermeture, qui est étanchéifié par rapport au corps de base de boîtier (26), une fermeture automatique (58) étant disposée en particulier sur le boîtier (24) pour libérer le clapet de boîtier (27).

11. Dispositif de raccordement selon l'une quelconque des revendications 1 à 10, **caractérisé en ce**
**que,** pour un rapport entre une surface d'appui de liquide de nettoyage A_{S} s'étendant perpendiculairement à une direction de gravité et une surface totale A_{B} d'une paroi intérieure (W) délimitant l'espace intérieur (25), on a : 0 ≤ A_{S} /A_{B} ≤ 0,1, en particulier 0,001 ≤ A_{S} /A_{B} ≤ 0,05, et en particulier 0,005 ≤ A_{S} /A_{B} ≤ 0,01.

12. Dispositif de raccordement selon l'une quelconque des revendications 1 à 11, **caractérisé**
**par** un dispositif de commande (57) pour commander le nettoyage de l'espace intérieur (25).

13. Installation pour la préparation de produits en vrac comprenant
- un engrenage (5) avec au moins un arbre d'engrenage (20, 21),
- une machine à vis sans fin (3) avec au moins un arbre à vis sans fin (11, 12), et
- un dispositif de raccordement (23) selon l'une quelconque des revendications 1 à 12, dans lequel ledit au moins un arbre d'engrenage (20, 21) est raccordé audit au moins un arbre à vis sans fin (11, 12) dans ledit espace intérieur (25) au moyen d'une liaison d'arbre (35, 36) respective.

14. Procédé de nettoyage d'un dispositif de raccordement destiné à raccorder une machine à vis sans fin à un engrenage, comprenant les étapes suivantes :
- mise à disposition d'un dispositif de raccordement (23) selon l'une quelconque des revendications 1 à 12, et
- nettoyage de l'espace intérieur (25) et d'une paroi intérieure (W) délimitant l'espace intérieur (25) en actionnant ledit au moins un élément de nettoyage (43).
